# EUROPEAN PATENT SPECIFICATION

(11) **EP 3 562 132 B1**
(45) Date of publication and mention of the grant of the patent: **26.05.2021**
(21) Application number: 19171000.3
(22) Date of filing: 25.04.2019
(51) Int. Cl.: H04M 11/02

(54) **INTERCOM SYSTEM, CONTROL METHOD AND COMPUTER PROGRAM**
GEGENSPRECHANLAGE, STEUERUNGSVERFAHREN UND COMPUTERPROGRAMM
SYSTÈME D'INTERPHONE, PROCÉDÉ DE COMMANDE ET PROGRAMME INFORMATIQUE

(30) Priority: 27.04.2018 JP 2018087723
(43) Date of publication of application: 30.10.2019
(73) Proprietor: Panasonic Intellectual Property Management Co., Ltd., Osaka-shi, Osaka 540-6207 (JP)
(72) Inventor: Yagi, Toshihiko, Osaka-shi, Osaka 540-6207 (JP); Hashimoto, Takanori, Osaka-shi, Osaka 540-6207 (JP); Nagai, Shoji, Osaka-shi, Osaka 540-6207 (JP); Tsukamoto, Kazuma, Osaka-shi, Osaka 540-6207 (JP); Shimonaka, Yuki, Osaka-shi, Osaka 540-6207 (JP)
(74) Representative: Appelt, Christian W.

(56) References cited:
- JP-A- S63 103 543
- JP-A- 2007 096 502
- JP-A- 2007 174 094
- JP-A- 2013 042 357
- US-A1- 2006 078 102

## Description

### Technical Field

The disclosure relates generally to intercom systems, control methods and computer programs and, more particularly, to an intercom system that allows calls from the side of an operating part to a callee (or called party), a control method of the intercom system, and a computer program.

### Background Art

JP 2012-15974 A (hereinafter referred to as "Document 1") describes an intercom system. The intercom system is composed of an outdoor station equipped with a camera, and an indoor station. The outdoor station is allowed to be installed beside the front door of a house, the common use entrance (lobby entrance) of a group of houses, or the like. The indoor station is allowed to be installed indoors, and configured to perform communication with the outdoor station of the intercom.

The intercom system described in Document 1 synthesizes an introduction image and a real-time image to display the synthesized image through a display of the indoor station. Here, the introduction image is a short-time image captured by the camera of the outdoor station according to a call made by a visitor. The real-time image is an image captured by the camera after the visitor makes the call.

JP 2007 096502 A provides an intercom device capable of informing a resident of the name and business of a visitor before the resident responds to a call from the visitor. When there's a call from a porch slave, the master of a living room transmits a message stored into a voice storage section to the porch slave, and demands a response, such as the business, of the visitor. When the visitor responds to the message, the voice is recorded at the voice storage, and the recorded voice is reported through a master speaker repeatedly. When the reported sound is received and a call button is pressed, the reported sound is stopped for allowing a call mode to start. When the call button is not pressed, the reported sound is stopped in set time for returning to a standby mode.

JP 2013 042357 A discloses an intercom system including: an entrance slave unit having image input means for producing image data of a visitor; and an indoor master unit having face detecting means for detecting a face image from the image data, memory means for storing registered face image data and voice data, a master unit speaker, and master unit control means. The master unit control means extracts the feature amount of a face from the fage image data of the detected visitor and the registered face image data, and determines whether the registered data matching or closely resemble to the visitor exists or not from the extracted feature amount. The master unit control means reads out the voice data corresponding to the registered face image data from the memory means and reproduces that from the master unit speaker, when the visitor has been registered.

JP S63 103543 A provides an automatic answering function and an automatic response function to a doorphone by constituting a master set of a recording and reproducing device and a voice message recorder, and a slave set of a speaker, a microphone and a pushbutton. An own message is recorded to the recording and reproducing device. When a visitor depresses a pushbutton, a buzzer is raised and a message recorded by the recording and reproducing device is supplied externally by a speaker. Then the message of a visitor, that is, the conversation is supplied to a microphone is its identity and the reason of visit are recorded. In case of presence, the message is listened to be a monitor speaker and the person accepts a required visitor only and when the person does not want to speak with the visitor, the person pretends to be out. Thus, the visit reason is known without direct communication with the visitor.

US 2006/078102 A1 discloses a door bell answering system for a dwelling includes an internally disposed answering device which has a housing, a control member capable of at least storing and playing an audio message, a speaker for broadcasting the audio message and a predetermined plurality of function keys manually operable from an exterior surface of the housing for operating the control member and the speaker. An externally disposed panel has a housing mounted to an exterior surface of the dwelling, a microphone disposed within the housing, a first switch for activating a door bell, a second switch for activating the answering device and the microphone and for enabling a visitor to record the audio message. The control panel and the answering device are connected by wires for transmitting the audio message therebetween.

JP 2007 174094 A provides an interphone device the recording section of which can effectively be used whereby the recording section stores a message recording only when a message is surely received in the case of recording the message during absence. A living room master unit in a recording setting state starts recording when receiving a call from an entrance slave unit, and starts time count of a timer. The living room master unit terminates the recording after a lapse of 15 seconds thereafter, and when the entrance slave unit transmits voice for that time, a voice switch is switched from an idle mode to a speech receiving mode and the recording is implemented. When the recording is finished, the living room master unit measures a time while the voice switch stays in the speech receiving mode, that is, a duration time when the message is being talked by a visitor, stores the message when the message is recorded in excess of two seconds without deleting the message, but deletes the message this time temporarily stored in the recording section when the message recording time is two seconds or below.

### Summary of Invention

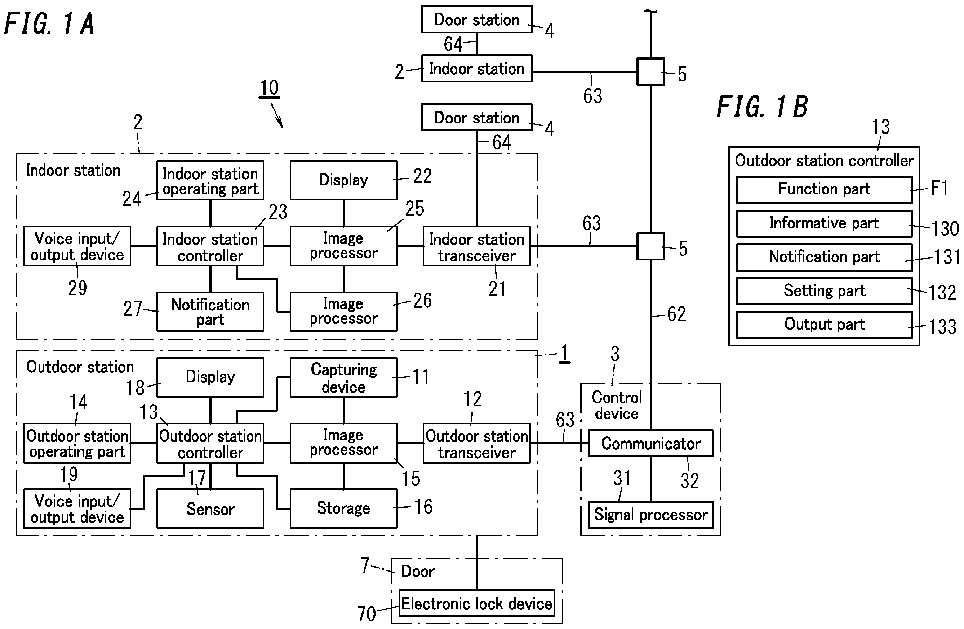

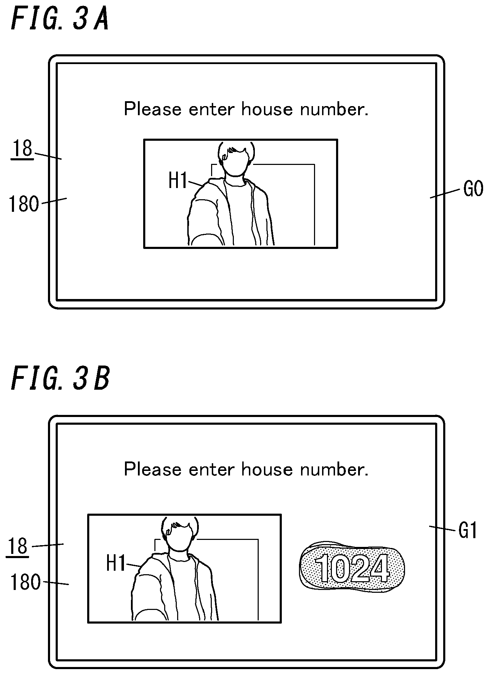

The object of the present application is solved by the independent claims. Advantageous embodiments are described by the dependent claims. The embodiments disclosed in the figures 1 and 2, and 7 to 9 fall under the scope of the invention, and the embodiments disclosed in the figures 3A to 6C are not part of the invention. A callee on the side of the indoor station has a desire to know, at earlier timing, the information on an operator such as a caller or a visitor who has made a call through the outdoor station. However, displaying the image of the operator may put the callee to the trouble of getting closer to the indoor station.

The present disclosure has been achieved in view of the above circumstances, and an object thereof is to provide an intercom system, a control method and a computer program, capable of improving convenience of the intercom system.

An intercom system according to an aspect of the disclosure includes a function part. The function part is configured to, within or prior to a predetermined period, start acquiring information on an operator who operates an operating part to enter an operation for specifying a callee therethrough. The predetermined period is a period of time during which the callee is being called based on the operation entered. Acquiring the information contains at least sound recording.

A control method according to an aspect of the disclosure is a method of controlling an intercom system. The control method includes, as a function step, within or prior to a predetermined period, starting acquiring information on an operator who operates an operating part to enter an operation for specifying a callee therethrough. The predetermined period is a period of time during which the callee is being called based on the operation entered. Acquiring the information contains at least sound recording.

A computer program according to an aspect of the disclosure includes instructions which, when the program is executed by a computer, cause the computer to carry out the control method.

### Brief Description of Drawings

FIG. 1A is a block diagram depicting a configuration of an intercom system according to an embodiment of the disclosure.
FIG. 1B is a block diagram depicting a configuration of an outdoor station controller in the intercom system.
FIG. 2 is a timing diagram illustrating an operation of the intercom system.
FIG. 3A is a conceptual diagram of an on-screen guide displayed through a display of the outdoor station in the intercom system.
FIG. 3B is a conceptual diagram of an on-screen guide displayed through the display of the outdoor station in the intercom system.
FIG. 4A is a conceptual diagram of an on-screen guide displayed through the display of the outdoor station in the intercom system.
FIG. 4B is a conceptual diagram of an on-screen guide displayed through the display of the outdoor station in the intercom system.
FIG. 4C is a conceptual diagram of an on-screen guide displayed through the display of the outdoor station in the intercom system.
FIG. 5A is a conceptual diagram of an on-screen guide displayed through the display of the outdoor station in the intercom system.
FIG. 5B is a conceptual diagram of an on-screen guide displayed through the display of the outdoor station in the intercom system.
FIG. 6A is a conceptual diagram showing a situation where the side of an indoor station in the intercom system is being called.
FIG. 6B is a conceptual diagram showing a situation where the side of the indoor station in the intercom system is being called.
FIG. 6C is a conceptual diagram showing a situation where the side of the indoor station in the intercom system is being called.
FIG. 7 is a timing diagram illustrating an operation of Modified Example 1 of the intercom system.
FIG. 8 is a timing diagram illustrating an operation of Modified Example 2 of the intercom system.
FIG. 9 is a timing diagram illustrating an operation of Modified Example 3 of the intercom system.

### Description of Embodiments

### (1) SCHEMA

Each of FIGS. 1A to 9 to be explained in an embodiment below is a schematic diagram. In FIGS. 1A to 9, respective ratios of size and thickness of each constituent element to those of a corresponding whole structure do not necessarily reflect their respective actual ratios.

An intercom system 10 according to the present embodiment is an intercom system that is applicable to, for example a group of houses such as an apartment building or an apartment block. As shown in FIG. 1A, the intercom system 10 allows an outdoor station (or entrance panel) 1 to communicate with each of indoor stations (or monitors) 2 through a control device 3. Note that the intercom system 10 according to the embodiment may be applied to a detached house other than the group of houses. Alternatively, the intercom system 10 may be applied to premises other than residential dwellings, such as offices, stores, schools or nursing facilities.

The intercom system 10 according to the embodiment includes a function part F1. Here, as shown in an example of FIG. 1B, it is assumed that the function part F1 is provided for an outdoor station controller 13 in the outdoor station 1 (see FIG. 1A). That is, the outdoor station controller 13 possesses a function as the function part F1. The outdoor station 1 is, for example a common terminal (lobby intercom panel) that is allowed to be installed in a common area of the group of houses, such as a lobby. The outdoor station 1 may be configured to perform communication (e.g., door phone calls, video signal transmission and the like) with, for example each of indoor stations 2 in multiple groups of houses.

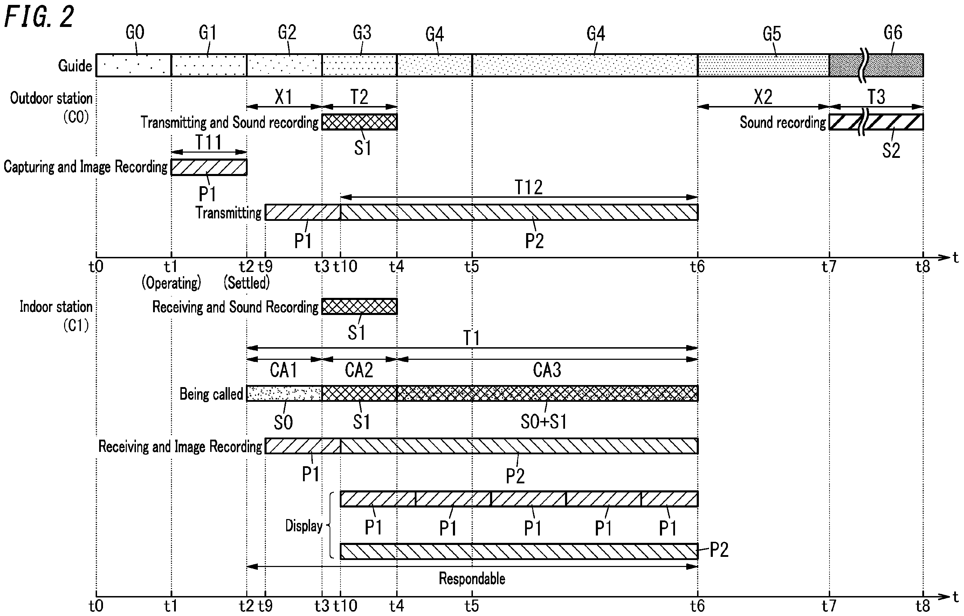

The function part F1 is configured to, within a predetermined period (of time) T1 (see FIG. 2) or prior to the predetermined period T1, start acquiring information on operators H1 such as, e.g., visitors (see FIG. 3A) who operate an operating part (outdoor station operating part 14) to enter an operation for specifying a callee (or called party) C1 into the function part F1 or the outdoor station controller 13 therethrough. Note that in FIG. 3A, a capturing device 11 of the outdoor station 1 captures an image of an operator H1, while the captured image is displayed on a display screen 180 of a display (device) 18.

The predetermined period T1 is a period of time during which the callee C1 is being called based on the operation entered. Acquiring the information contains at least sound recording. Here, as an example it is assumed that acquiring the information (sound recording) is started within the predetermined period T1 (see FIG. 2).

With this configuration, at least the sound recording is started within the predetermined period T1 during which the callee C1 is being called, or prior to time when the callee C1 is called. Therefore, utilizing (e.g., providing information on) sound information acquired from the sound recording enables a user (e.g., occupant or dweller) to know the information on the operator H1 at earlier timing. It is consequently possible to improve convenience of the intercom system 10.

### (2) DETAILS

The intercom system 10 according to the present embodiment will hereinafter be explained in detail.

### (2.1) OVERALL CONFIGURATION

As shown in FIG. 1A, the intercom system 10 according to the embodiment includes the outdoor station (slave station) 1, two or more (in FIG. 1A, two) indoor stations (master stations) 2, the control device 3, two or more (in FIG. 1A, two) door stations (doorbell stations) 4, and two or more (in FIG. 1A, two) branch devices 5.

Each of the indoor stations 2 is, for example a house terminal that is allowed to be installed in a house (apartment or flat) of the group of houses. Specifically, the indoor station 2 is configured to perform communication (e.g., door phone calls, video signal reception and the like) with the outdoor station 1. The indoor station 2 possesses a display (device) 22 configured to display an image captured by the capturing device 11 of the outdoor station 1 on a display screen thereof. The embodiment may be further provided with indoor stations 2 located in particular places other than the houses (apartments or flats) in the group of houses, such as a management room and a multipurpose room. The multipurpose room is a common use facility in the group of houses, such as, for example, a meeting place, a guest room, a children's room or a banquet room.

The control device 3 is configured to perform call control and signal relay between the outdoor station 1 and each indoor station 2. The control device 3 is installed in, for example the management room. For example, when a visitor makes a call to an indoor station 2 through the outdoor station 1, the control device 3 relays signals transmitted and received between the outdoor station 1 and the indoor station 2.

The door stations 4 are installed beside, for example their respective house (apartment or flat) front doors in the group of houses. The door stations 4 correspond one-on-one to the indoor stations 2. Specifically, the door station 4 is configured to perform communication (e.g., door phone calls, video signal transmission and the like) with a corresponding indoor station 2. Note that each of the indoor stations 2 installed in the particular places needn't be connected to a door station 4.

The outdoor station 1 is connectable to the control device 3 through a first main line 61. The branch devices 5 are configured to be daisy-chained together through a second main line 62 so as to be connected to their respective corresponding indoor stations 2 through their respective corresponding branch lines 63. That is, in the embodiment, with the branch lines 63 branching off from the second main line 62, the branch devices 5 are placed at their respective corresponding branching points on the second main line 62. This makes it possible to connect the indoor stations 2 to the second main line 62 through their respective branch lines 63 and branch devices 5.

The indoor stations 2 are therefore connected to the control device 3 through the second main line 62, the branch lines 63 and the branch devices 5. The door stations 4 are connected to their respective corresponding indoor stations 2 through their respective corresponding connection lines 64. Note that each of the first main line 61, the second main line 62, the branch lines 63 and the connection lines 64 is composed of, for example a twisted pair cable.

### (2.2) OUTDOOR STATION

### (2.2.1) OVERALL CONFIGURATION OF OUTDOOR STATION

A configuration of the outdoor station 1 will next be explained. As shown in FIG. 1A, the outdoor station 1 possesses the capturing device 11, an outdoor station transceiver (transmitter/receiver) 12, the outdoor station controller 13, the outdoor station operating part 14, an image processor 15, a storage (device) 16, a sensor 17 and the display 18. The outdoor station 1 further possesses a voice input/output device 19 (microphone and loudspeaker) and the like for realizing a door phone call to each indoor station 2. The outdoor station 1 also possesses an enclosure (not shown) that houses or holds the above constituent elements.

The capturing device 11 is, for example a camera that possesses an image element and is configured to capture images of subjects. Here, it is assumed that the subjects correspond to the above operators H1 such as visitors. In the embodiment, a captured area (field of view) of the capturing device 11 is set in front of the outdoor station 1, in order to enable capturing images of at least operators' (H1) faces when the operators H1 operate the outdoor station 1 (outdoor station operating part 14). In the embodiment, the capturing device 11 is, for example a camera configured to capture moving images. More specifically, in the embodiment, the capturing device 11 is, for example a camera configured to capture moving color images.

The image element is, for example a two-dimensional image sensor such as a charge coupled device (CCD) image sensor or a complementary metal-oxide semiconductor (CMOS) sensor. The capturing device 11 focuses light from a subject onto an image-capturing or focal plane (photoactive region) of the image element through an optical system such as a lens to convert the light from the subject into an electric signal. The capturing device 11 then provides an output signal (the electric signal) of the image element to the image processor 15.

The outdoor station transceiver 12 is a communication interface configured to communicate with the indoor stations 2. The outdoor station transceiver 12 is connected to the control device 3 through the first main line 61. FIG. 1A depicts the first main line 61 by one line. The outdoor station transceiver 12 is configured to perform two-way communication with the indoor stations 2 through a communicator (communication device) 32 of the control device 3. That is, the outdoor station transceiver 12 is configured to transmit a communication signal to the indoor stations 2. The communication signal contains a sound signal, an image signal, a control signal and the like. The outdoor station transceiver 12 is also configured to receive, through the communicator 32, a communication signal transmitted from the outdoor station transceivers 12 to demodulate the received communication signal, thereby obtaining a sound signal and the like. The sound signal is provided to the voice input/output device 19 through the outdoor station controller 13.

The outdoor station operating part 14 is configured to allow persons (operators H1) to enter operations into the outdoor station 1 therethrough. The outdoor station operating part 14 is, for example an input interface with push buttons, a touch panel and the like. Examples of the push buttons include numeric buttons (or keys) "0" to "9", an asterisk (*) button (or key), a Del button (or key), a Call (or Bell) button and the like. Here, when operators H1 let occupants (or dwellers) of a house (apartment or flat) know that they are there, they push the numeric keys corresponding to the house to enter a house number. The house number is, for example "Number 1024". The house number entered is displayed on the display screen 180 of the display 18 according to the numeric keys pushed sequentially (see FIG. 3B). Finally, when operators H1 push the Call button, the house number entered is settled and a call is made with respect to the occupants of the house of "Number 1024" through the indoor station 2 thereof.

The image processor 15 is configured to receive the image signal provided from the capturing device 11 to perform signal processing of an image contained in the image signal. Examples of a device realizing the image processor 15 include a digital signal processor (DSP), a field-programmable gate array (FPGA) and the like.

The sensor 17 is, for example a pyroelectric infrared sensor. Specifically, the sensor 17 may be configured to measure a change (change value) in infrared radiation generated from a moving object such as a human to detect the moving object. The sensor 17 may be omitted.

The outdoor station controller 13 is composed of, for example a microcomputer, main constituent elements of which include a central processing unit (CPU) and a memory. The CPU executes a program stored in the memory, so that the microcomputer functions as the outdoor station controller 13. Herein, the program to be executed by the CPU may not only be stored in the memory of the microcomputer in advance, but also be provided through a (non-transitory) computer readable (storage) medium such as a memory card, or through a telecommunications network such as the Internet.

The outdoor station controller 13 is configured to control the capturing device11, the outdoor station transceiver 12, the image processor 15 and the display 18.

The outdoor station controller 13 may control the capturing device11 to cause the capturing device11 to capture an image. In an example of the present embodiment, when the sensor 17 detects a person such as a visitor, the outdoor station controller 13 activates the capturing device 11 to cause it to start capturing an image of the person. The outdoor station controller 13 also controls the display 18 so that an on-screen guide prompting the person to enter a house number is displayed on the display screen 180 together with a real-time image that is being captured by the capturing device11 and superimposed therein (see FIG. 3A).

The outdoor station controller 13 may also provide a corresponding indoor station 2 with images captured by the capturing device11, before and while a callee C1 on the side of the indoor station 2 is called and while the outdoor station 1 is communicating with the indoor station 2. In a specific example, the outdoor station controller 13 causes the capturing device 11 to capture a first image P1 during a first capturing period T11 (see FIG. 2). The outdoor station controller 13 then causes the capturing device 11 to capture a second image P2 during a second capturing period T12 (see FIG. 2). The first capturing period T11 is, for example a period of time (e.g., about five seconds) between when the outdoor station operating part 14 receives an operation from an operator H1 such as a visitor (time t1 in FIG. 2) and when a call is made. The second capturing period T12 is, for example a period of time between when the transmission of the first image P1 to the indoor station 2 is completed and when the call or communication is completed. The second image P2 is what is called a real-time image, and the first image P1 is a past image prior to the second image P2.

The outdoor station controller 13 may control the outdoor station transceiver 12 to cause it to transmit and receive respective communication signals to and from the indoor station 2, respectively. The communication signal to the indoor station 2 contains a sound signal, an image signal, a control signal and the like. The communication signal from the indoor station 2 contains a sound signal, a control signal and the like (but not limited to, other than an image signal).

The outdoor station controller 13 may control the image processor 15 to cause it to perform image processing of an image contained in the image signal from the capturing device 11. The image after the image processing by the image processor 15 is transmitted from the outdoor station transceiver 12 to the indoor station 2.

The outdoor station controller 13 is configured to operate as various functions according to operations entered through the outdoor station operating part 14. The outdoor station controller 13 may be configured to, based on a relationship with a current on-screen guide displayed on the display screen 180 of the display 18, operate as a function corresponding to the on-screen guide. In an example, when numeric buttons are operated while an on-screen guide prompting the operator H1 to enter the house number is displayed on the display screen 180, the outdoor station controller 13 causes the display 18 to display the numbers entered on the display screen 180. When the Call button is operated after the house number is entered, the outdoor station controller 13 starts making a call to the callee C1 on the side of the indoor station 2.

The storage 16 may be composed of, for example a readable/writable (rewritable) memory. The storage 16 is, for example a flash memory. The storage 16 may store (record) the first and second images P1 and P2 captured by the capturing device 11. In the embodiment, the storage 16 is provided outside the outdoor station controller 13, but may be provided inside the outdoor station controller 13. That is, the storage 16 may be a built-in memory of the outdoor station controller 13. Note that the storage 16 may store different pieces of data to be described later other than the first and second images P1 and P2 captured by the capturing device 11.

The display 18 possesses the display screen 180 composed of, for example a liquid crystal display. As shown in FIGS. 3A to 5B, the display 18 may output (display) an on-screen basic guide G0 and first to sixth on-screen guides G1 to G6 according to the control by the outdoor station controller 13. The on-screen guides G0 to G6 are merely examples, and the present disclosure is not limited to the number of the on-screen guides types and display contents thereof in particular. The display 18 may also display images of visitors (operators H1) themselves captured by the capturing device 11 according to the control by the outdoor station controller 13. For example, part of the on-screen guides (in the illustrated examples, on-screen guides G0 and G1) may be outputted through the display 18 together with a real-time image that is being captured by the capturing device 11 and superimposed approximately in a center thereof (see FIG. 3A). Thus, the operator's (H1) image, while the callee C1 on the side of the indoor station 2 is being called or within the communication (conversation) therewith, is outputted to the side of the indoor station 2 and not displayed on the display screen 180.

As shown in FIG. 1B, the outdoor station controller 13 further possesses respective functions as the function part F1, an informative part 130, a notification part 131, a setting part 132 and an output part 133.

In an example of the embodiment, the function part F1 is configured to start sound recording within the predetermined period T1 (see FIG. 2). The function part F1 may start sound recording at the beginning of the predetermined period T1 as a trigger. That is, the function part F1 may start the sound recording at the beginning of the predetermined period T1 or after a lapse of a constant time beginning at the beginning of the predetermined period T1. Here, as one example, the function part F1 starts the sound recording after a lapse of a constant time beginning at the beginning of the predetermined period T1. Note that the sound recording within the predetermined period T1 is hereinafter also called "first sound recording".

The predetermined period T1 is a period of time during which the callee C1 is being called based on the house number (or the management room's number) specified through the outdoor station operating part 14. In the embodiment, the predetermined period T1 begins at, for example a point in time (time t2) at which the Call button is pushed to settle the house number. The predetermined period T1 ends at the time of a response from the callee C1 within the predetermined period T1 or at the time (time t6) when the predetermined period T1 has been elapsed in the case of no response from the callee C1. Therefore, when the callee C1 makes no response, the period of time during which the callee C1 is being called is set to the longest period by the predetermined period T1. The predetermined period T1 is, for example 30 seconds in longest length. When the callee C1 makes a response within the predetermined period T1, the period of time during which the callee C1 is being called ends at the time of the response.

The "response" by the callee C1 stated in the disclosure means a response signal transmitted from the indoor station 2 responsive to the operation by the callee C1 through the indoor station operating part 24. The response signal includes not only a speech (voice) signal transmitted from the indoor station 2 to the outdoor station 1 as the start of the response but also a control signal for unlocking an electronic lock device (electric strike) 70 (see FIG. 2) in a door (building entrance door) 7 on a passage between the outdoor station operating part 14 of the outdoor station 1 and each indoor station 2. The door 7 is, for example a common entrance door beside the outdoor station 1 in the common area of the group of houses. When operators H1 are particular persons such as the callee's family, relatives or friends, the speech between the indoor station 2 and the outdoor station 1 may be omitted. However, since the response signal also includes the control signal for unlocking the electronic lock device, the sound recording would be reduced to be wasted even if the response by the speech is omitted.

### (2.2.2) FIRST SOUND RECORDING

Respective functions of the function part F1, the informative part 130, the notification part 131, the setting part 132 and the output part 133 of the outdoor station controller 13, relating to the first sound recording will hereinafter be explained in detail. The beginning of the first sound recording may be any point in time within the predetermined period T1, but is preferably close to the beginning (start time t2) of the period of time while the callee C1 is being called. The first sound recording is performed for a constant period (e.g., 5 seconds). A period of time while the first sound recording is actually performed is hereinafter called a recording period T2 (see FIG. 2). The longest period of the recording period T2 is the constant period.

Herein, the function part F1 stops the first sound recording when the callee C1 makes the response before the first sound recording is started or while the first sound recording is being performed. That is, the recording period T2 is zero when the callee C1 makes the response before the first sound recording is started, whereas the recording period T2 is greater than zero and less than the constant period when the callee C1 makes the response while the first sound recording is being performed. This enables reduction in resources spent by the first sound recording (e.g., storage area in the built-in memory for storing information on power consumption and sound).

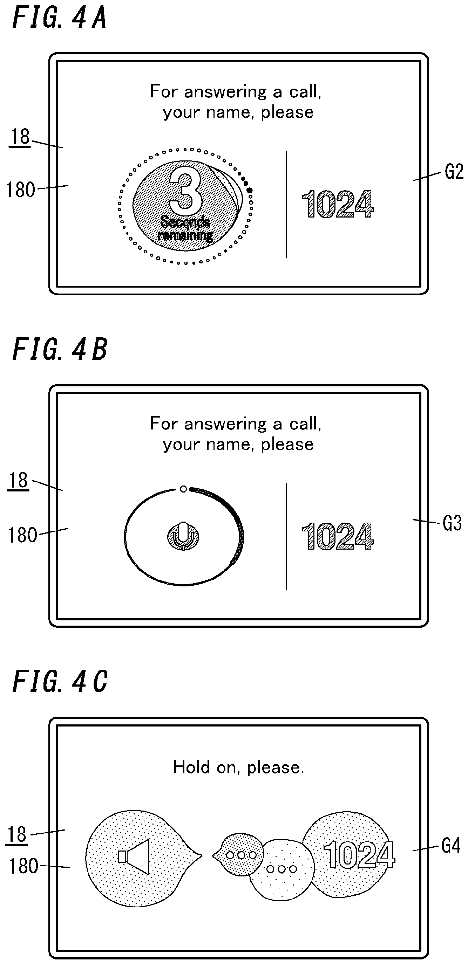

Note that in the embodiment the first sound recording is not started at the same time as the start time t2 of the predetermined period T1, but is started after a lapse of a predetermined first guide period X1 (e.g., 5 periods) beginning at the start time t2 (see FIG. 2). The first guide period X1 is a period of time in which a first voice message is outputted in advance before the first sound recording is performed so as to inform of the start of the first sound recording. Examples of the first voice message include "Hello, your name, please." and the like. For example, the loudspeaker of the voice input/output device 19 emits the first voice message. Within the first guide period X1, the second on-screen guide G2 (see FIGS. 2 and 4A) is displayed on the display screen 180 of the display 18, besides the output of the first voice message. The second on-screen guide G2 contains an information set of guide information based on text data (e.g., "For answering a call (putting a call through to the callee C1), your name, please."), information on countdown to the beginning of the first sound recording, and the like. Note that as one example, FIG. 4A illustrates that remaining time up to the beginning of the first sound recording is 3 seconds.

Within the first guide period X1 while the outdoor station 1 outputs the second on-screen guide G2, the indoor station 2 causes its own notification part 27 (to be described later) to emit a ring tone S0 (e.g., sound something like "ding-dong", etc.). A period of time in which the ring tone S0 is emitted is hereinafter called a first call period CA1 (see FIG. 2). The first call period CA1 is part of the predetermined period T1. The first call period CA1 is almost the same as the first guide period X1 and is for example, 5 seconds.

In the embodiment, the informative part 130 is configured to cause the callee C1 to provide, within the predetermined period T1, information based on first sound information acquired from the first sound recording . The first sound information acquired from the first sound recording is hereinafter also called "first sound data S1" (see FIG. 2). Specifically, the first sound data S1 is obtained from an electrical signal which for example, the microphone of the voice input/output device 19 converts the operator's (H1) voice into. The first sound data S1 may contain a personal name or a title (caretaker, janitor or the like) of the operator H1. The first sound data S1 may also contain information on the operator H who is a delivery man of a delivery company, such as a name or a corporate name of the delivery company. The first sound data S1 may also contain a simple message (business or visit purpose). Note that the recording period T2 of the first sound recording is relatively a short period of time, and therefore the first sound data S1 may have a high possibility of containing any one or two of the personal name, the title, the company name, the corporate name, the business (or visit purpose) and the like.

The informative part 130 may control the notification part 27 of the indoor station 2 through a communication signal transmitted to the indoor station 2 to cause the notification part 27 to provide information within the predetermined period T1. When the first sound recording is started, the outdoor station controller 13 transmits first sound data S1 acquired from the first sound recording to the indoor station 2 while temporarily storing the first sound data S1 in its own built-in memory to cause the indoor station 2 to reproduce the first sound data S1 in real time, by streaming for example. Thus, the informative part 130 causes the indoor station 2 to provide the information based on the first sound data S1 within the period of time while the callee C1 is being called. A period of time in which sound is outputted according to the first sound data S1 is hereinafter called a second call period CA2 (see FIG. 2). The second call period CA2 is part of the predetermined period T1. The second call period CA2 is almost the same as the recording period T2 and is for example, 5 seconds. Within the second call period CA2, preferably the output of the ring tone S0 is stopped temporarily.

When the recording period T2 of the first sound recording is shorter than the predetermined period T1, the informative part 130 may cause the indoor station 2 to repeatedly provide the above information. For example, when the predetermined period T1 is 30 seconds in length and each of the first guide period X1 and the recording period T2 is 5 seconds in length, the information based on the first sound data S1 may repeatedly be provided within the remaining 20 second period. A period of time in which the information based on the first sound data S1 is repeatedly provided is hereinafter called a third call period CA3 (see FIG. 2).

The third call period CA3 is part of the predetermined period T1. The third call period CA3 is a remaining period of time obtained by subtracting the first and second call periods CA1 and CA2 from the predetermined period T1. Note that within the third call period CA3, a set of the ring tone S0 and the sound according to the first sound data S1 is outputted repeatedly. That is, the third call period CA3 contains output periods, in each of which the ring tone S0 and the subsequent sound according to the first sound data S1 are outputted in succession. Thus, the information based on the first sound data S1 is repeatedly provided, thereby enabling an improvement in informative performance for users (e.g., occupants or dwellers) as callees C1.

Note that the first sound data S1 to be employed as information within the third call period CA3 may be stored in the indoor station 2 when the indoor station 2 receives the first sound data S1 from the outdoor station 1 at first. Alternatively, the first sound data S1 stored in the memory of the outdoor station controller 13 may be repeatedly transmitted to the indoor station 2.

In the embodiment, the notification part 131 is configured to, within the first sound recording (i.e., recording period T2), notify remaining time for the first sound recording to the operator H1 on the side of the outdoor station operating part 14 (operating part). Herein, as one example, the notification part 131 may notify the remaining time to the operator H1 by displaying a circular on-screen timer on the display screen 180 of the display 18 as shown in FIG. 4B. Specifically, an arcuate band is gradually elongated with time and finally forms a circular shape when the remaining time reaches zero. Thus, the notification part 131 is provided, thereby enabling operators H1 to know the end of the first sound recording. Accordingly, the convenience of the intercom system 10 is improved.

Note that the remaining time may be notified to operators H1 by gradually removing part of a circle and finally removing the whole when the remaining time reaches zero. Alternatively, the remaining time may be notified by numeric countdown like FIG. 4A. Note that displaying the on-screen timer as shown in FIG. 4B is easier to intuitively understand the remaining time.

In the embodiment, the setting part 132 is configured to receive setting information on a setting change about whether or not the first sound recording is performed (enabling or disabling of first sound recording). For example, the outdoor station controller 13 may display an on-screen setting guide on the display screen 180 of the display 18 when a contractor or an administrator of the intercom system 10 (outdoor station 1) enters a specified operation with a high security level unknown by occupants and the like through the outdoor station operating part 14 or the like in a state where a specified on-screen guide is displayed on the display screen 180. While viewing information of the on-screen setting guide, the contractor or the administrator is able to enter the information on the setting change about whether or not the first sound recording is performed. When the display 18 is, for example a touch panel display, the setting change may be performed by a fingertip touch-operation. The information on enabling or disabling of the first sound recording that is set herein may be stored in the storage 16 or the built-in memory of the outdoor station controller 13. Thus, the setting part 132 is provided, thereby making it possible to enable or disable the first sound recording according to installation environment of the intercom system 10, a demand or the like.

In the embodiment, the setting part 132 is also configured to receive setting information on a setting change about whether or not the informative part 130 causes the indoor stations 2 to provide information to their respective callees C1 (enabling or disabling of information provision). In this case, like the setting change about the first sound recording, while viewing information of the on-screen setting guide, the contractor or the administrator is able to enter the information on the setting change about whether or not the informative part 130 causes the indoor stations 2 to provide information. Note that the respective setting changes about the first sound recording and the information provision are preferably performed according to a common on-screen guide. Information on enabling or disabling of information provision that is set herein may be stored in the storage 16 or the built-in memory of the outdoor station controller 13. Thus, the setting part 132 is provided, thereby making it possible to enable or disable informative functions according to installation environment of the intercom system 10, a demand or the like. Note that setting change about information provision may be performed for each of the indoor stations 2, or may be performed at the side of each indoor station 2 by the occupants.

In the embodiment, the output part 133 is configured to emit, at the side of the outdoor station operating part 14, a confirmation sound for notifying that the callee C1 is being called. When the callee C1 is called continuously when the first sound recording is completed, the output part 133 may start emitting the confirmation sound. The output part 133 causes the loudspeaker of the voice input/output device 19 to emit the confirmation sound. When a call is made, the output part 133 may emit, as the confirmation sound, the first voice message of "Hello, your name, please." as state above. Also, when the callee C1 is called continuously when the first sound recording is completed, the output part 133 may emit, as the confirmation sound, a second voice message of, for example "For answering a call, hold on, please." The second voice messages may be stored in the storage 16 or the built-in memory of the outdoor station controller 13 in advance. Thus, the output part 133 emits the second voice message, thereby enabling operators H1 to know a current situation where the call is continued after the first sound recording is completed. Accordingly, the convenience of the intercom system 10 is improved.

### (2.2.3) SECOND SOUND RECORDING

Here, the function part F1 in the embodiment is configured to start second sound recording different from the first sound recording when callees C1 make no response within the predetermined period T1. Second sound information acquired from the second sound recording is hereinafter also called "second sound data S2" (see FIG. 2). The second sound data S2 is obtained from an electrical signal which for example, the microphone of the voice input/output device 19 converts operators' (H1) voice into. For example, the second sound data S2 may be richer in information content than the first sound data S1. Specifically, the second sound data S2 may contain, for example both operator's (H1) name or title (caretaker, janitor or the like) and a simple message (business or visit purpose). The second sound recording may be performed for a recording period T3 of e.g., 15 seconds (see FIG. 2). The recording period T3 is longer than the recording period T2 of the first sound recording.

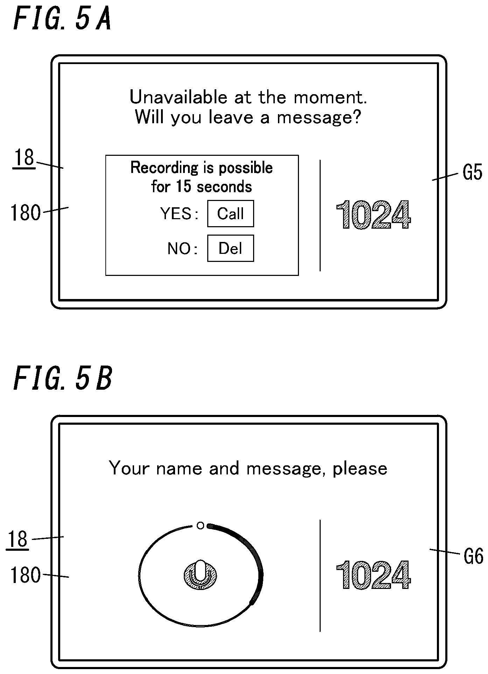

The second sound recording may be started not at the same time as time t6 at which no response is settled (see FIG. 2), but only at time when operators H1 enters an operation indicating intention for performing the second sound recording through the outdoor station operating part 14 within a predetermined second guide period X2 (e.g., 10 seconds) beginning at time t6. That is, the second guide period X2 is a period of time that allows operators H1 to choose whether or not to cause the outdoor station 1 to perform the second sound recording. The output part 133 may cause the loudspeaker of the voice input/output device 19 to output a third voice message of e.g., "Unavailable at the moment. Will you leave your name and a message?" The fifth on-screen guide G5 (see FIGS. 2 and 5A) may also be displayed on the display screen 180 of the display 18 in the output of the third voice message within the second guide period X2. The fifth on-screen guide G5 may contain for example, information such as "Unavailable at the moment. Will you leave your name and a message?", information on the second sound recording time, such as "Recording is possible for 15 seconds.", and information on choice between "YES: Call (or Bell)" and "NO: Del".

When operators H1 push the Call button, the second sound recording is started, so that they are able to leave a message. Note that in FIG. 2, the Call button is pushed at time t7 that is the end of the second guide period X2, and thereby the second sound recording is started.

When operators H1 push the Del button, the second sound recording is cancelled, so that no message is left. The on-screen guide then returns from the fifth on-screen guide to the initial on-screen basic guide G0. Note that even when operators H1 leave without pushing any button by the end of the second guide period X2 (time t7) in a state where the fifth on-screen guide G5 is displayed, the fifth on-screen guide G5 is changed to the initial on-screen basic guide G0.

Thus, the intercom system 10 performs the second sound recording, and thereby the second sound recording is rendered available in the same way as what is called message recording by an answering machine.

In the embodiment, when the second sound recording is performed, the outdoor station controller 13 may store second sound data S2 (second sound information) acquired from the second sound recording in the storage 16. In this case, preferably at time when the second sound data S2 is stored in the storage 16, the outdoor station controller 13 deletes the first sound data S1 (first sound information) acquired from the first sound recording temporarily stored in its own built-in memory. On the other hand, when the second sound recording is not performed, the outdoor station controller 13 may store, in the storage 16, the first sound data S1 acquired from the first sound recording temporarily stored in the built-in memory.

The sound data stored in the storage 16 may be kept as message data like data recorded by the abovementioned message recording till predetermined days (e.g., seven days) are elapsed, and then deleted after a lapse of the predetermined days. The message data may also be transferred to and stored in the indoor station 2 to be kept therein till predetermined days (e.g., seven days) are elapsed. The message data may be deleted as a result of users (e.g., occupants) entering an operation for deleting it into their respective indoor stations 2.

Thus, since the first sound data S1 acquired from the first sound recording is stored in the storage 16 even if the second sound recording is not performed, it is possible to employ the first sound recording like the abovementioned message recording in place of the second sound recording. Even when there is a visitor in the absence of occupants and the second sound recording is not performed in particular, it is possible to notify the occupants of information that allows conjecture about visitor's business (or visit purpose) to some extent although the first sound data S1 is probably poor in information content as compared to data to be acquired from the second sound recording.

### (2.3) INDOOR STATION CONFIGURATION

The configuration of the indoor stations 2 will next be explained. Specifically, as shown in FIG. 1A, the indoor station 2 possesses an indoor station transceiver (transmitter/receiver) 21, the display (device) 22, an indoor station controller 23, an indoor station operating part 24, an image processor 25, a storage (device) 26 and the notification part 27. The indoor station 2 further possesses a voice input/output device 29 (including microphone and loudspeaker) and the like for realizing a call (door phone call) between the indoor station 2 and both the outdoor station 1 and a corresponding door station (or doorbell station) 4.

The indoor station transceiver 21 is, for example a communication interface configured to communicate with the outdoor station 1 and the door station 4. The indoor station transceiver 21 is connectable to control device 3 through the second main line 62, the branch line 63 and a corresponding branch device 5. FIG. 1A depicts each of the second main line 62 and the branch line 63 by one line. The indoor station transceiver 21 is configured to perform two-way communication with the outdoor station 1 through the communicator 32 of the control device 3. The indoor station transceiver 21 may be configured to transmit a communication signal to the outdoor station 1. The communication signal may contain a sound signal, a control signal and the like (but not limited to, other than an image signal). The indoor station transceiver 21 may also be configured to receive, through the communicator 32, a communication signal transmitted from the outdoor station 1 to demodulate the received communication signal, thereby obtaining a sound signal, an image signal and the like. The sound signal is provided for the voice input/output device 29 through the indoor station controller 23, while the image signal is displayed on a display screen of the display 22 through the indoor station controller 23.

The display 22 is configured to display an image (e.g., an image captured by the capturing device 11 of the outdoor station 1) from the image processor 25 on the display screen. The display 22 is, for example a liquid crystal display. Note that the indoor station 2 may include a touch screen that functions as the display 22 and the indoor station operating part 24.

The indoor station operating part 24 is configured to allow persons (e.g., occupants) to enter operations into the indoor station 2 (indoor station controller 23) therethrough. For example, when occupants operate the indoor station operating part 24 to enter a predetermined operation (e.g., push operation) while the indoor station transceiver 21 is receiving a call signal for calling the occupants, a voice call is permitted between respective sides of the outdoor and indoor stations 1 and 2, namely between a caller and a callee.

The image processor 25 is configured to receive an image signal from the outdoor station 1 through the indoor station transceiver 21 to perform image processing of an image contained in the image signal. For example, the image processor 25 may perform processing for synthesizing two or more images. In an example of the embodiment, the image processor 25 synthesizes the first image P1 as a past image and the second image P2 as a real-time image to produce one image. Examples of the image processor 25 to be realized include DSP, FPGA and the like.

The indoor station controller 23 is composed of, for example a microcomputer, main constituent elements of which include a CPU and a memory. The CPU executes a program stored in the memory, so that the microcomputer functions as the indoor station controller 23. Herein, the program to be executed by the CPU may not only be stored in the memory of the microcomputer in advanced, but also be provided through a (non-transitory) computer readable (storage) medium such as a memory card, or through a telecommunications network such as the Internet.

The indoor station controller 23 is configured to control the indoor station transceiver 21, the display 22 and the image processor 25. The indoor station controller 23 may control the indoor station transceiver 21 to cause it to transmit and receive respective communication signals to and from the outdoor station 1, respectively. The communication signal to the outdoor station 1 contains a sound signal, a control signal and the like (but not limited to, other than an image signal). The communication signal from the outdoor station 1 contains a sound signal, an image signal, a control signal and the like.

The indoor station controller 23 may control the display 22 to display an image transmitted from the outdoor station 1 on the display screen of the display 22. In an example of the embodiment, one image synthesized by both the first image P1 as a past image and the second image P2 as a real-time image may be displayed on the display screen of the display 22. For example, the indoor station controller 23 may display the first and second images P1 and P2 in small and large scales on the display screen of the display 22, respectively.

The storage 26 is composed of, for example a readable/writable memory. The storage 26 is, for example a flash memory. The storage 26 may store the first and second images P1 and P2 transmitted from the outdoor station 1. In the embodiment, the storage 26 is provided outside the indoor station controller 23, but may be provided inside the indoor station controller 23. In short, the storage 26 may be a built-in memory of the indoor station controller 23.

The notification part 27 is configured to emit, for example a ring tone S0. When the outdoor station 1 makes a call, the indoor station controller 23 may cause the notification part 27 to emit a ring tone S0 at prescribed timing. In other words, when the outdoor station 1 makes a call, the indoor station controller 23 may cause the notification part 27 to perform a notification operation to notify that the outdoor station 1 has made the call. The notification part 27 may further be configured to emit a sound according to the first sound data S1 from the outdoor station 1 besides the ring tone S0. The sound may be omitted from the loudspeaker of the voice input/output device 29 according to the first sound data S1. The first sound data S1 may be stored in the storage 26 or the built-in memory.

### (2.4) CONTROL DEVICE CONFIGURATION

The configuration of the control device 3 will next be explained. As shown in FIG. 1A, the control device 3 possesses a signal processor 31 and the communicator 32.

The communicator 32 is, for example a communication interface configured to communicate with the outdoor station 1 and the indoor stations 2. The communicator 32 is connectable to the outdoor station 1 through the first main line 61. The communicator 32 is also connectable to the indoor stations 2 through the second main line 62, the branch lines 63 and the branch devices 5. The communicator 32 may be configured to perform two-way communication with the outdoor station transceiver 12 of the outdoor station 1. The communicator 32 may also be configured to perform two-way communication with the respective indoor station transceivers 21 of the indoor stations 2. That is, the communicator 32 may relay signals transmitted and received between the outdoor station transceiver 12 and the indoor station transceivers 21. Thus, the communicator 32 relays to transmit a communication signal, from the outdoor station transceiver 12 of the outdoor station 1, to the indoor stations 2. Here, the communication signal transmitted from the outdoor station 1 contains information (e.g., address or the like) for specifying an indoor station 2 on the side of a callee. This enables only the indoor station 2, whose address assigned thereto accords with the address contained in the communication signal, to receive the communication signal. The communicator 32 also relays to transmit a communication signal, transmitted from each of the indoor stations 2, to the outdoor station 1.

The signal processor 31 is composed of, for example a microcomputer, main constituent elements of which include a CPU and a memory. The CPU executes a program stored in the memory, so that the microcomputer functions as the signal processor 31. Herein, the program to be executed by the CPU may not only be stored in the memory of the microcomputer in advance, but also be provided through a (non-transitory) computer readable (storage) medium such as a memory card, or through a telecommunications network such as the Internet.

The signal processor 31 is configured to control the communicator 32. Specifically, the signal processor 31 may control the communicator 32 to cause it to transmit a communication signal, transmitted from the outdoor station 1, to the indoor stations 2 and transmits a communication signal, transmitted from each of the indoor stations 2, to the outdoor station 1.

### (2.5) OPERATION OF INTERCOM SYSTEM

An operation of the intercom system 10 will hereinafter be explained with reference to FIGS. 2 to 6C. In the explanation below, it is assumed that although a caller C0 makes a call through the outdoor station 1 with respect to a callee C1 on the side of an indoor station 2, there is no response from the callee C1 (from the indoor stations 2). Note that within "Respondable" period from time t2 to time t6 shown in the lower part of FIG. 2, the callee C1 on the side of the indoor station 2 is allowed to start communication (conversation) with the caller C0 on the side of the outdoor station 1 at any timing.

When the sensor 17 of the outdoor station 1 detects a visitor at time t0, the outdoor station 1 activates the capturing device 11 and displays the on-screen basic guide G0 as shown in FIG. 3A on the display screen 180 of the display 18. The on-screen basic guide G0 contains text-based guidance that prompts the visitor to enter a house number where required. In addition, visitor's image is superimposed in the on-screen basic guide G0.

It is assumed that at time t1, the operator H1 (visitor) then starts entering the house number (in the illustrated example, 1024) through the outdoor station operating part 14 according to the on-screen basic guide G0. When the operator H1 starts entering the house number as a trigger, the outdoor station 1 causes the capturing device 11 to perform "Capturing and Image Recording" of a first image P1 during a first capturing period T11. The first capturing period T11 is 5 seconds in length and begins at time (time t1) when an initial key is entered by pushing a numeric button (in the example of FIG. 3B, numeric button "1").

When the operator H1 starts entering the house number, the outdoor station 1 changes the on-screen basic guide G0 on the display screen 180 to the first on-screen guide G1 as shown in FIG. 3B. Whenever each digit of the house number is entered, the display 18 renews the first on-screen guide G1. Finally, when the operator H1 pushes the Call button of the outdoor station operating part 14, the house number entered is settled. The outdoor station 1 then controls the indoor station 2 of the house number "1024" on the side of the callee C1 through the control device 3 to cause it to start an operation for the call during the predetermined period T1. Here, time t2 represents the beginning of the predetermined period T1 (for the call). In the illustrated example, although the end of the first capturing period T11 accords with the beginning of the predetermined period T1 for the call (time t2), the end of the first capturing period T11 may be earlier than the predetermined period T1 (time t2) in general. Note that the outdoor station 1 starts transmitting, to the indoor station 2, a first image P1 at time t9 after the end of the first capturing period T11.

At time t2, the outdoor station 1 changes the first on-screen guide G1 displayed on the display screen 180 to the second on-screen guide G2 as shown in FIG. 4A, and further emits the first voice message such as "Hello, your name, please." The display 18 displays the second on-screen guide G2 to provide guide information such as "For answering a call, your name, please." and countdown information to the beginning of the first sound recording. Since the first guide period X1 during which the second on-screen guide G2 is displayed is, for example 5 seconds in length, the countdown starts at 5 seconds before.

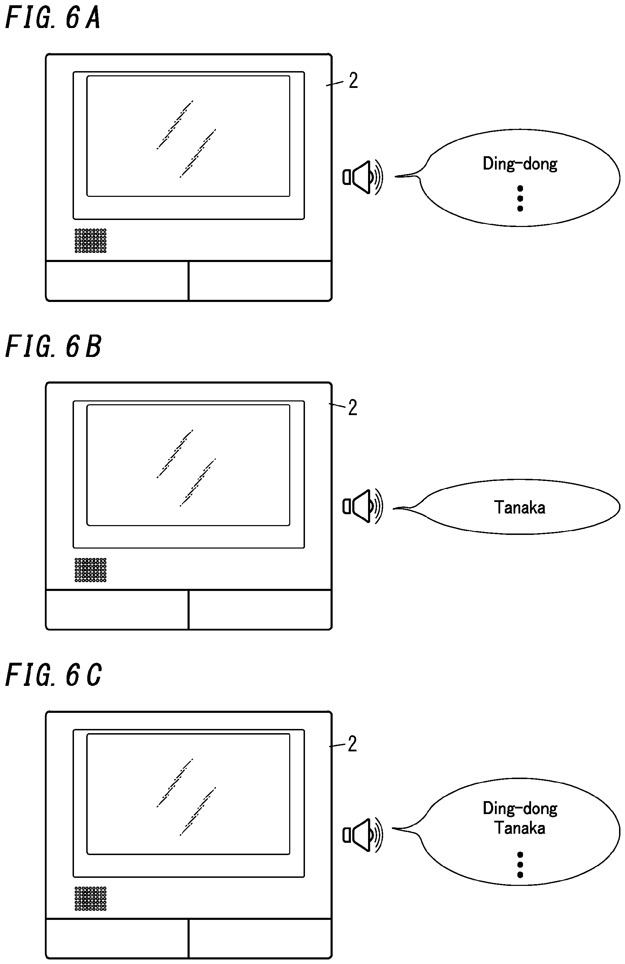

On the other hand, at time t2, the indoor station 2 starts emitting the ring tone S0 something like "ding-dong" as shown in FIG. 6A. The ring tone S0 is repeatedly emitted during a first call period CA1 from time t2 to time t3. The indoor station 2 also performs "Receiving and Image Recording" of the first image P1 transmitted from the outdoor station 1. Note that the indoor station 2 displays an image according to the first image P1 during time t9 to time t10 although it is omitted in FIG. 2.

The outdoor station 1 then changes the second on-screen guide G2 displayed on the display screen 180 to the third on-screen guide G3 as shown in FIG. 4B at time t3 when the first guide period X1 ends. At time t3, the outdoor station 1 also starts first sound recording to perform "Transmitting and Sound Recording" of first sound data S1. The display 18 displays an on-screen timer in the third on-screen guide G3, thereby notifying the operator H1 of remaining time of a constant period (time t3 to time t4) during which the first sound recording is performed. As stated above, since it is assumed that there is no response from the callee C1 on the side of the indoor station 2, the constant period during which the first sound recording is performed defines a recording period T2. Here, it is assumed that the operator H1 responds to say "Tanaka" according to the on-screen guide by the outdoor station 1. In this case, the first sound data S1 contains voice data on only the personal name "Tanaka". When the operator H1 responds to say, for example "Tanaka. I come to see you.", the first sound data S1 contains voice data on the personal name "Tanaka" and a visit purpose of "I come to see you."

At time t10 between time t3 and time t4, when the transmission of the first image P1 is completed, the outdoor station 1 immediately starts capturing and transmitting a second image P2. The capturing and transmitting of the second image P2 is continued during a second capturing period T12 (time t10 to time t6). Time t6 is the end of the predetermined period T1 of the call, and therefore the capturing and transmitting of the second image P2 is continued up to the end of the remaining time of the predetermined period T1 of the call after time t10.

On the other hand, at time t3, the indoor station 2 starts "Receiving and Sound Recording" of the first sound data S1. Within a second call period CA2 from time t3 to time t4, as shown in FIG. 6B, the indoor station 2 temporarily stops emitting the ring tone S0 something like "ding-dong" and emits a sound according to the first sound data S1 containing only "Tanaka" in real time. Note that the indoor station 2 may output, for example the visit purpose of "I come to see you." besides the personal name of "Tanaka". From time t10 to the end (time t6) of the predetermined period T1 of the call, the indoor station 2 also performs "Receiving and Image Recording" of the second image P2 and continues displaying one image produced by synthesizing the first image P1 as a past image and the second image P2 as a real-time image.

When the outdoor station 1 still continues the predetermined period T1 (a period of time during which the callee C1 is being called) at the end of the first sound recording (time t4), the third on-screen guide G3 displayed on the display screen 180 is changed to the fourth on-screen guide G4 as shown in FIG. 4C. The display 18 provides guide information such as "Hold on, please." in the fourth on-screen guide G4. The outdoor station 1 further emits, as a confirmation sound, the second voice message such as "For answering a call, hold on, please." The display 18 continues displaying the fourth on-screen guide G4 up to the end of the remaining time of the predetermined period T1 of the call after time t5 (up to time t6). The second voice message is however not emitted after time t5. Note that a period of time from time t4 to time t5 is, for example 5 seconds in length, and a period of time from time t5 to time t6 is, for example 15 seconds in length.

When the outdoor station 1 finishes "Transmitting and Sound Recording" of the first sound data S1 at time t4, the indoor station 2 also finishes "Receiving and Sound Recording" of the first sound data S1, so that the second call period CA2 ends. Then, in the indoor station 2, a third call period CA3 from time t4 to time t6 is started. As shown in FIG. 6C, within the third call period CA3, the indoor station 2 repeatedly provides information set by both a ring tone S0 something like "ding-dong" and the first sound data S1 containing "Tanaka". The information set is repeatedly provided up to the end (time t6) of the predetermined period T1 of the call. Note that within the third call period CA3, the indoor station 2 may repeatedly provide not the abovementioned information set but information only by the first sound data S1 containing "Tanaka".

When there is no response from the callee C1 on the side of the indoor station 2 even at the end (time t6) of the predetermined period T1 of the call, the outdoor station 1 performs processing of the second sound recording. The outdoor station 1 changes the fourth on-screen guide G4 displayed on the display screen 180 to the fifth on-screen guide G5 as shown in FIG. 5A, and prompts the operator H1 to choose whether or not to perform the second sound recording as explained in "(2.2.3) SECOND SOUND RECORDING".

Within a second guide period X2, when the operator H1 pushes the Call button, the outdoor station 1 changes the fifth on-screen guide G5 displayed on the display screen 180 to a sixth on-screen guide G6 as shown in FIG. 5B, and performs second sound recording during a constant period T3 from time t7 to time t8 (e.g., 15 seconds). The sixth on-screen guide G6 contains an on-screen timer showing remaining time up to the end of the second sound recording, like the third on-screen guide G3. When the second sound recording is completed, the outdoor station 1 changes the sixth on-screen guide G6 displayed on the display screen 180 to the default on-screen basic guide G0, and returns to a stand-by state. The outdoor station 1 also deletes the first sound data S1 temporarily recorded in the built-in memory by the first sound recording, and stores the second sound data S2 by the second sound recording in the storage 16 as message data.

On the other hand, when the operator H1 pushes the Del button or does not push any button within the second guide period X2, the outdoor station 1 changes the current on-screen guide displayed on the display screen 180 to the default on-screen basic guide G0 without performing the second sound recording, and returns to the stand-by state. The outdoor station 1 also stores, in the storage 16, the first sound data S1 temporarily recorded in the built-in memory by the first sound recording as message data.

Thus, in the embodiment, the first sound recording is started within the predetermined period T1 as a period of time during which the callee C1 is being called, and it is thereby possible to render the first sound data S1 (first sound information) acquired by the first sound recording available at earlier timing. It is therefore possible to improve the convenience of the intercom system 10.

Particularly, the informative part 130 of the outdoor station 1 causes the indoor station 2 on the side of the callee C1 to provide information based on the first sound data S1 (first sound information) within the predetermined period T1 as the period of time during which the callee C1 is being called. It is therefore possible to further improve the convenience of the intercom system 10.

The function part F1 of the outdoor station 1 starts the first sound recording at the beginning of the predetermined period T1 as a trigger. It is therefore possible to improve time efficiency as compared to the first sound recording being started prior to the predetermined period T1.

### (3) MODIFIED EXAMPLES

The above embodiment is merely one of various embodiment of the present disclosure. In the embodiment, various modifications are possible in light of general arrangement and the like as long as an object of the disclosure is achieved. Functions similar to the intercom system 10 according to the embodiment may be embodied by a control method of the intercom system 10, a computer program, or a (non-transitory) computer readable (storage) medium storing the computer program.

Modified examples of the embodiment will hereinafter be described. The modified examples to be explained below may be properly applied in combination. Note that the embodiment is hereinafter also referred to as a "Basic Example".

In the intercom system 10 according to the disclosure, for example the outdoor station controller 13 of the outdoor station 1 and the like may include a computer (system). The computer system may be mainly composed of a processor and a memory as hardware. The processor executes a computer program stored in the memory of the computer system, thereby realizing a function as the outdoor station controller 13 according to the disclosure. The computer program may be stored in the memory of the computer system in advance or provided through a telecommunications network or through a (non-transitory) computer readable (storage) medium storing the computer program, such as a memory card, an optical disc and a hard disc drive. The processor of the computer system may be composed of one or more electronic circuits including a semiconductor integrated circuit (IC) or a large scale integrated (LSI) circuit. The electronic circuits may be integrated as one chip, or provided on chips in a distributed manner. The chips may be consolidated into one device, or provided in devices in a distributed manner.

The configuration in which the functions of the outdoor station 1 are consolidated into one housing is not essential. The constituent elements of the outdoor station 1 may be provided in housings in a distributed manner. At least part of the functions of the outdoor station 1, such as the outdoor station controller 13 may be realized by, for example a cloud (cloud computing) service or the like. In contrast, all the functions of the outdoor station 1 may be consolidated into one housing like the above embodiment.

Particularly, in the example of the above intercom system 10, the outdoor station controller 13 of the outdoor station 1 is provided with respective functions of the function part F1, the informative part 130, the notification part 131, the setting part 132 and the output part 133. The indoor station controller 23 of each indoor station 2, the control device 3 in the management room, an unillustrated universal terminal, or the like may be provided with at least part of respective functions of the function part F1, the informative part 130, the notification part 131, the setting part 132 and the output part 133.

### (3.1) MODIFIED EXAMPLE 1

In the basic example, the function part F1 of the outdoor station 1 starts the first sound recording within the period of time during which the callee C1 is being called (predetermined period T1). The function part F1 may however start the first sound recording prior to the call (i.e., prior to the predetermined period T1).

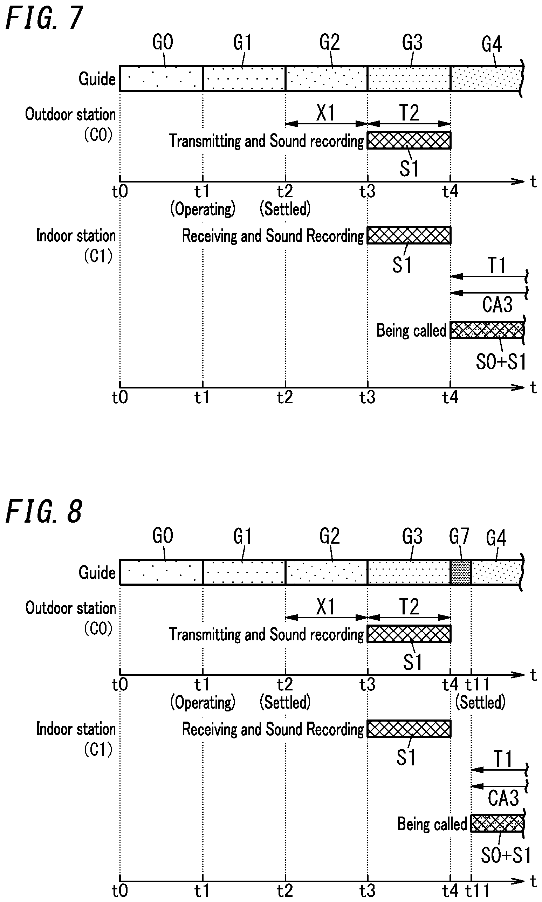

FIG. 7 is a timing diagram illustrating an operation of an intercom system 10 as Modified Example 1. A predetermined period T1 to be set in the modified example may be shorter than the predetermined period T1 of the basic example. Specifically, the predetermined period T1 in the modified example contains only a third call period CA3 and corresponds to a period of time obtained by removing the first and second call periods CA1 and CA2 from the predetermined period T1 in the basic example. Although the end of the period of time (predetermined period T1) during which the callee C1 is being called in the modified example is the same as that of the basic example, the beginning of the predetermined period T1 is delayed from time t2 to time t4. In short, first sound recording in the modified example is set to start prior to the call (i.e., prior to the predetermined period T1) as a result of the beginning of the predetermined period T1 being delayed.

In this configuration, the period of time during which the callee C1 on the side of the indoor station 2 is being called is started not immediately after a Call button of an outdoor station operating part 14 is pushed at time t2, but after a lapse of a constant time (e.g., 10 seconds). Like the basic example, the first sound recording is started after a lapse of a first guide period X1 (e.g., 5 seconds) beginning at the push of the Call button.

Even in this configuration, it is possible to render first sound data S1 (first sound information) acquired by the first sound recording available at earlier timing. It is therefore possible to improve the convenience of the intercom system 10.

Note that timing at which the outdoor station 1 starts transmitting images and the indoor stations 2 start receiving and displaying the images may be appropriately changed according to the change of the beginning of the predetermined period T1 of the call, although FIG. 7 omits to show first and second images P1 and P2.

The modified example does not have both first and second call periods CA1 and CA2 in order to more delay the beginning of the predetermined period T1 than that of the basic example, but may remove only one of them as long as the other is made shorter than that of the basic example. Alternatively, the modified example may have both the first and second call periods CA1 and CA2 as long as they are set to be shorter than those of the basic example. The modified example may have both the first and second call periods CA1 and CA2 like the basic example as long as only the third call period CA3 is shorter than that of the basic example. The modified example may have the predetermined period T1 whose length is the same as that of the basic example as long as both the beginning and the end of the period of time during which the callee C1 is being called are more delayed than those of the basic example.

### (3.2) MODIFIED EXAMPLE 2

In Modified Example 1, the outdoor station 1 starts the first sound recording after a lapse of the first guide period X1 (e.g., 5 seconds) beginning at the push of the Call button of the outdoor station operating part 14, and starts making a call (the predetermined time T1) after a lapse of a constant time (e.g., 10 seconds) beginning at the start of the first sound recording.

FIG. 8 is a timing diagram illustrating an operation of an intercom system 10 of Modified Example 2. In the modified example, an outdoor station 1 is configured to start first sound recording, for example after a lapse of a first guide period X1 beginning at a first push of a Call button for settling a house number entered, and starts making a call (a predetermined period T1) at a second push of the call button. That is, the modified example enables operators H1 to voluntarily vary the beginning of the predetermined period T1 with the start of the first sound recording not synchronized with the beginning of the predetermined period T1 of the call. In the example of FIG. 8, time t2 is time when the house number entered is settled, and time t11 slightly delayed from time t4 is time when timing of making a call is settled.

In this case, preferably the outdoor station 1 displays a seventh on-screen guide G7 on a display screen 180 of a display 18 after the end of the first sound recording (time t4). The seventh on-screen guide G7 contains guide information such as "Push Call button again, please."

This configuration also makes it possible to render first sound data S1 (first sound information) acquired from the first sound recording available at earlier timing. It is therefore possible to improve the convenience of the intercom system 10.

Note that in the modified example, although each of the twice push operations is an operation of pushing the Call button, different buttons may be pushed. For example, the first push operation for settling the house number entered may be an operation of pushing an asterisk button, and the second push operation for settling timing of making a call may be an operation of pushing the Call button.

### (3.3) Modified Example 3

In the basic example, Modified Example 1 and Modified Example 2, the start of the first sound recording is determined by the operation of pushing the Call button for settling the house number entered. The first sound recording may however be determined responsive to, for example a sensor's (17) detection result as a trigger representing the presence of humans such as visitors instead of the operation as a trigger entered through the outdoor station operating part 14.

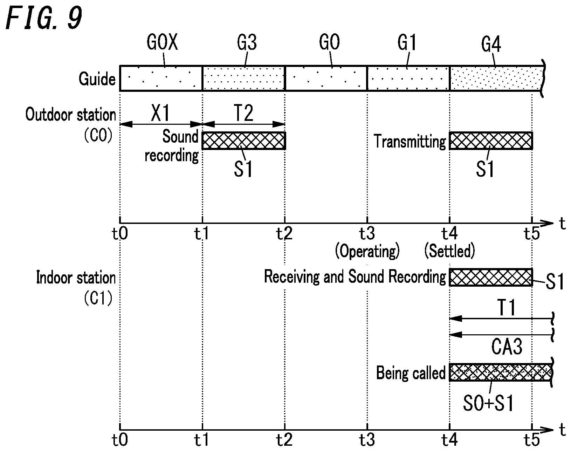

FIG. 9 is a timing diagram illustrating an operation of an intercom system 10 of Modified Example 3. An outdoor station 1 is configured to emit a voice message such as "Hello. Leave your message, please" when a sensor 17 detects humans at e.g., time t0. Here, a first guide period X1 (in the illustrated example, between time t0 and time t1) is provided in order to notify in advance that first sound recording is started. The outdoor station 1 is also configured to display an on-screen basic guide G0X on a display screen 180 of a display 18. The on-screen basic guide G0X contains text-based guidance such as "Hello. Leave your message, please.", and information on countdown to the beginning of the first sound recording. The outdoor station 1 then starts the first sound recording at time t1.

In this case, at time t1, a house number has not yet been entered, and therefore a callee C1 has not yet been settled. The transmission of first sound data S1 is therefore delayed. Within time t1 to t2, the outdoor station 1 displays a third on-screen guide G3 on the display screen 180 of the display 18. The third on-screen guide G3 contains an on-screen timer showing remaining time up to the first sound recording.

During time t2 to t3, the outdoor station 1 displays an on-screen basic guide G0 that prompts operators H1 to enter a house number. Immediately after a call button for settling the house number entered is pushed at time t4, the outdoor station 1 starts transmitting the first sound data S1 and making a call with respect to a callee C1 on the side of a corresponding indoor station 2.

This configuration also makes it possible to render the first sound data S1 (first sound information) acquired from the first sound recording at earlier timing. It is therefore possible to improve the convenience of the intercom system 10.

Note that the modified example may have a possibility that the first sound recording will be started when a person who has no intention of operating an outdoor station operating part 14 approaches the outdoor station 1. It is therefore desirable that after the sensor 17 detects the presence of the person, the outdoor station 1 delete the first sound data S1 (with no voice) acquired from the first sound recording when there is no operation even after a lapse of a constant time.

### (3.4) Other Modified Examples

In the basic example, the function part F1 starts only the first sound recording in order to acquire information on operators H1 within the predetermined period T1. A function part F1 in a modified example may start image recording along with first sound recording within a predetermined period T1. The image recording stated herein may be equivalent to recording of the second image P2 in the basic example, or may be another image unlike the second image P2.

In Modified Examples 1 to 3, the function part F1 starts only the first sound recording in order to acquire information on operators H1 before the predetermined period T1. A function part F1 in a modified example may start image recording along with first sound recording before a predetermined period T1. The image recording stated herein may be equivalent to recording of the first image P1 in the basic example, or may be another image unlike the first image P1.

In the basic example, the predetermined period T1 (the longest period thereof when there is no response) is 30 seconds in length, but not limited thereto in particular. The predetermined period T1 may be, for example, 60 seconds or the like.

In the basic example, the function part F1 starts sound recording after a lapse of a constant time beginning at the beginning of the predetermined period T1. The function part F1 may however start the sound recording at the same time as the beginning of the predetermined period T1. In short, the first guide period X1 for notifying operators H1 in advance that the first sound recording is started is not essential, but may be omitted as appropriate.

In the basic example, the outdoor station 1 stores, as message data, only one of the first sound data S1 acquired from the first sound recording and the second sound data S2 acquired from the second sound recording in the storage 16, and also transfers the message data to a corresponding indoor station 2. However, the outdoor station 1 may store, as a message data set, both the first sound data S1 and the second sound data S2 in the storage 16, and also transfer the message data set to the corresponding indoor station 2. The outdoor station 1 may also store, as history data of a visitor, the first sound data S1 acquired from the first sound recording in the storage 16 regardless of presence or absence of the response from a corresponding callee C1, and also transfer the history data to the corresponding indoor station 2.

In the basic example, while performing the first sound recording, the function part F1 stops the first sound recording when there is a response from a corresponding callee C1. However, even if the first sound recording is stopped while the first sound data S1 are stored in the storage 16, the outdoor station 1 may keep the first sound data S1 stored in the storage 16 and also transfer the first sound data S1 to a corresponding indoor station 2. For example, the first sound data S1 may be incomplete data on a personal name, a company name, a corporate name, a message or the like when the callee C1 makes a response during the first sound recording, so that the recording period T2 of the first sound recording that is 5 seconds in longest length is 2 to 3 seconds in length. However, even if the first sound data S1 are such incomplete data, the outdoor station 1 may employ the first sound data S1 as message data or history data of visitors.

In the basic example, the intercom system 10 may include an information terminal which dedicated application software including a device driver programmed to direct the information terminal to perform wireless communication with a corresponding indoor station 2 is installed on. The information terminal is, for example a smartphone that allows a user such as an occupant to carry. In this case, the indoor station 2 transfers data containing a ring tone S0 and first sound data S1 to the information terminal, thereby causing the information terminal to put a call through to the user in real time. That is, as shown in FIG. 2 in the basic example, the information terminal emits the ring tone S0 at time t2, emits a sound according to the first sound data S1 at time t3, and then repeatedly provides the information set based on the ring tone S0 and the first sound data S1 on and after time t4.

## Claims

1. An intercom system (10), comprising a function part (F1) configured to, within or prior to a predetermined period (T1), start acquiring information on an operator (H1) who operates an operating part (14) of an outdoor station (1) to enter an operation for specifying a callee (C1) therethrough,
the predetermined period (T1) being a period of time during which the callee (C1) is being called based on the operation entered, and
acquiring the information containing at least sound recording, wherein
the function part (F1) is configured to, prior to or within the sound recording, stop the sound recording when there is a response from the callee (C1).

2. The intercom system (10) of claim 1, further comprising an informative part (130) configured to, within the predetermined period (T1), cause a side of the callee (C1) to provide information based on the sound information acquired from the sound recording.

3. The intercom system (10) of claim 2, wherein the informative part (130) is configured to repeatedly cause the side of the callee (C1) to provide the information when a recording period (T2) of the sound recording is shorter than the predetermined period (T1).

4. The intercom system (10) of claim 1, wherein the response contains unlocking an electronic lock device (70) in a door (7) on a passage between the operating part (14) and the side of the callee (C1).

5. The intercom system (10) of any one of claims 1 to 4, further comprising a notification part (131) configured to notify, at a side of the operating part (14), remaining time of the sound recording during the sound recording.

6. The intercom system (10) of any one of claims 1 to 5, wherein the function part (F1) is configured to, in addition to as the sound recording first sound recording, start second sound recording different from the first sound recording when there is no response from the callee (C1) during the predetermined period (T1).

7. The intercom system (10) of claim 6, further comprising a storage (16) configured to,
store second sound information (S2) acquired from the second sound recording, when the second sound recording is performed, and
store the first sound information (S1) acquired from the first sound recording, when the second sound recording is not performed.

8. The intercom system (10) of any one of claims 1 to 7, further comprising a setting part (132) configured to receive setting information on a setting change about whether or not the sound recording is performed.

9. The intercom system (10) of claim 8, further comprising an informative part (130) configured to cause the side of the callee (C1) to provide information based on the sound information acquired from the sound recording,
wherein the setting part (132) is configured to further receive setting information on a setting change about whether or not the information is provided.

10. The intercom system (10) of any one of claims 1 to 9, further comprising an output part (133) configured to emit, at the side of the operating part (14), a confirmation sound for notifying that the callee (C1) is being called,
wherein the output part (133) is configured to, when the callee (C1) being called is continued at time when the sound recording has been finished, start emitting the confirmation sound.

11. The intercom system (10) of any one of claims 1 to 10, wherein the function part (F1) is configured to start the sound recording at a beginning of the predetermined period (T1) as a trigger.

12. The intercom system (10) of any one of claims 1 to 11, wherein acquiring the information further contains image recording.

13. The intercom system (10) of any one of claims 1 to 12, wherein the function part (F1) is provided in any one of the outdoor station (1), an indoor station (2) configured to communicate with the outdoor station (1), and a control device (3) configured to relay signals transmitted or received between the outdoor station (1) and the indoor station (2).

14. A control method of an intercom system (10), comprising as a function step, within or prior to a predetermined period (T1), starting acquiring information on an operator (H1) who operates an operating part (14) of an outdoor station (1) to enter an operation for specifying a callee (C1) therethrough,
the predetermined period (T1) being a period of time during which the callee (C1) is being called based on the operation entered, and
acquiring the information containing at least sound recording, wherein
in the function step, prior to or within the sound recording, stopping the sound recording when there is a response from the callee (C1).

15. A computer program, comprising instructions which, when the program is executed by a computer, cause the computer to carry out the control method of claim 14.

## Patentansprüche

1. Sprechanlage (10), einen Funktionsteil (F1) aufweisend, der konfiguriert ist, um innerhalb oder vor einer vorbestimmten Periode (T1) ein Erlangen von Informationen über einen Bediener (H1) zu starten, der einen Bedienteil (14) einer Außenstation (1) betätigt, um über diesen eine Operation zum Spezifizieren eines Angerufenen (C1) einzugeben,
wobei die vorbestimmte Periode (T1) eine Zeitperiode ist, während der der Angerufene (C1) auf der Grundlage der eingegebenen Operation angerufen wird, und
Erlangen der Informationen, die mindestens eine Tonaufzeichnung umfasst, wobei
der Funktionsteil (F1) konfiguriert ist, um vor oder innerhalb der Tonaufzeichnung die Tonaufzeichnung anzuhalten, wenn eine Antwort von dem Angerufenen (C1) vorliegt.

2. Sprechanlage (10) nach Anspruch 1, ferner einen Informationsteil (130) aufweisend, der konfiguriert ist, um innerhalb der vorbestimmten Periode (T1) seitens des Angerufenen (C1) zu veranlassen, auf der Grundlage der Toninformationen, die von der Tonaufzeichnung her erlangt sind, Informationen vorzusehen.

3. Sprechanlage (10) nach Anspruch 2, wobei der Informationsteil (130) konfiguriert ist, um die Seite des Angerufenen (C1) wiederholt zu veranlassen, die Informationen vorzusehen, wenn eine Aufzeichnungsperiode (T2) der Tonaufzeichnung kürzer ist als die vorbestimmte Periode (T1).

4. Sprechanlage (10) nach Anspruch 1, wobei die Antwort ein Entriegeln einer elektronischen Verriegelungsvorrichtung (70) in einer Tür (7) an einem Durchgang zwischen dem Bedienteil (14) und der Seite des Angerufenen (C1) umfasst.

5. Sprechanlage (10) nach einem der Ansprüche 1 bis 4, ferner einen Meldungsteil (131) aufweisend, der konfiguriert ist, um seitens des Bedienteils (14) eine Restzeit der Tonaufzeichnung während der Tonaufzeichnung zu melden.

6. Sprechanlage (10) nach einem der Ansprüche 1 bis 5, wobei der Funktionsteil (F1) konfiguriert ist, um zusätzlich zu der Tonaufzeichnung als die zweite Tonaufzeichnung eine zweite Tonaufzeichnung zu starten, die sich von der ersten Tonaufzeichnung unterscheidet, wenn während der vorbestimmten Periode (T1) keine Antwort von dem Angerufenen (C1) vorliegt.

7. Sprechanlage (10) nach Anspruch 6, ferner einen Speicher (16) aufweisend, der konfiguriert ist, um,
die zweiten Toninformationen (S2) zu speichern, die von der zweiten Tonaufzeichnung her erlangt werden, wenn die zweite Tonaufzeichnung durchgeführt wird, und
die ersten Toninformationen (S1) zu speichern, die von der ersten Tonaufzeichnung her erlangt werden, wenn die zweite Tonaufzeichnung nicht durchgeführt wird.

8. Sprechanlage (10) nach einem der Ansprüche 1 bis 7, ferner ein Einstellungsteil (132) aufweisend, das konfiguriert ist, um Einstellinformationen über eine Einstellungsänderung darüber zu empfangen, ob die Tonaufzeichnung durchgeführt wird oder nicht.

9. Sprechanlage (10) nach Anspruch 8, ferner einen Informationsteil (130) aufweisend, der konfiguriert ist, um seitens des Angerufenen (C1) zu veranlassen, auf der Grundlage der Toninformationen, die von der Tonaufzeichnung her erlangt sind, Informationen vorzusehen,
wobei der Einstellungsteil (132) konfiguriert ist, um ferner Einstellinformationen über eine Einstellungsänderung darüber zu empfangen, ob die Informationen vorgesehen werden oder nicht.

10. Sprechanlage (10) nach einem der Ansprüche 1 bis 9, ferner einen Ausgabeteil (133) aufweisend, der konfiguriert ist, um seitens des Bedienteils (14) einen Bestätigungston auszugeben, um zu melden, dass der Angerufene (C1) angerufen wird,
wobei der Ausgabeteil (133) konfiguriert ist, um ein Ausgeben des Bestätigungstons zu starten, wenn der Angerufene (C1), der angerufen wird, zu einem Zeitpunkt, zu dem die Tonaufzeichnung beendet ist, fortgesetzt wird.

11. Sprechanlage (10) nach einem der Ansprüche 1 bis 10, wobei der Funktionsteil (F1) konfiguriert ist, um die Tonaufzeichnung zu Beginn der vorbestimmten Periode (T1) als ein Auslöser zu starten.

12. Sprechanlage (10) nach einem der Ansprüche 1 bis 11, wobei das Erlangen der Informationen ferner ein Aufzeichnen von Bildern umfasst.

13. Sprechanlage (10) nach einem der Ansprüche 1 bis 12, wobei der Funktionsteil (F1) in einer Außenstation (1), in einer Innenstation (2), die zur Kommunikation mit der Außenstation (1) konfiguriert ist, und in einer Steuerungsvorrichtung (3) vorgesehen ist, die zur Weiterleitung von Signalen konfiguriert ist, die zwischen der Außenstation (1) und der Innenstation (2) gesendet oder empfangen werden.

14. Steuerungsverfahren einer Sprechanlage (10), umfassend: als einen Funktionsschritt innerhalb oder vor einer vorbestimmten Periode (T1), Starten des Erlangens von Informationen über einen Bediener (H1), der einen Bedienteil (14) einer Außenstation (1) betätigt, um über diesen eine Operation zum Spezifizieren eines Angerufenen (C1) einzugeben,
wobei die vorbestimmte Periode (T1) eine Zeitperiode ist, während der der Angerufene (C1) auf der Grundlage der eingegebenen Operation angerufen wird, und
Erlangen der Informationen, das mindestens eine Tonaufzeichnung umfasst, wobei
in dem Funktionsschritt, vor oder innerhalb der Tonaufzeichnung, die Tonaufzeichnung angehalten wird, wenn eine Antwort von dem Angerufenen (C1) vorliegt.

15. Computerprogramm, Anweisungen aufweisend, die, wenn das Programm von einem Computer ausgeführt wird, den Computer veranlassen, das Steuerungsverfahren nach Anspruch 14 auszuführen.

## Revendications

1. Système d'interphone (10), comprenant une partie fonctionnelle (F1) configurée de manière à, avant ou au cours d'une période prédéterminée (T1), commencer à acquérir des informations sur un opérateur (H1) qui exploite une partie opérationnelle (14) d'une station extérieure (1) pour entrer une opération visant à spécifier un appelé (C1) à travers celle-ci ;
la période prédéterminée (T1) étant une période de temps pendant laquelle l'appelé (C1) est appelé sur la base de l'opération entrée ; et
l'acquisition des informations contient au moins un enregistrement sonore, dans lequel
la partie fonctionnelle (F1) est configurée de manière à, avant ou au cours de l'enregistrement sonore, arrêter l'enregistrement sonore lorsqu'il existe une réponse en provenance de l'appelé (C1).

2. Système d'interphone (10) selon la revendication 1, comprenant en outre une partie informative (130) configurée de manière à, au cours de la période prédéterminée (T1), amener un côté de l'appelé (C1) à fournir des informations sur la base des informations sonores acquises à partir de l'enregistrement sonore.

3. Système d'interphone (10) selon la revendication 2, dans lequel la partie informative (130) est configurée de manière à amener, de manière répétée, le côté de l'appelé (C1) à fournir les informations lorsqu'une période d'enregistrement (T2) de l'enregistrement sonore est plus courte que la période prédéterminée (T1).

4. Système d'interphone (10) selon la revendication 1, dans lequel la réponse contient le déverrouillage d'un dispositif de verrouillage électronique (70) d'une porte (7) sur un passage entre la partie opérationnelle (14) et le côté de l'appelé (C1).

5. Système d'interphone (10) selon l'une quelconque des revendications 1 à 4, comprenant en outre une partie de notification (131) configurée de manière à notifier, au niveau d'un côté de la partie opérationnelle (14), un temps restant de l'enregistrement sonore, pendant l'enregistrement sonore.

6. Système d'interphone (10) selon l'une quelconque des revendications 1 à 5, dans lequel la partie fonctionnelle (F1) est configurée de manière à, outre l'enregistrement sonore sous la forme d'un premier enregistrement sonore, démarrer un second enregistrement sonore, différent du premier enregistrement sonore, lorsqu'il n'y a pas de réponse en provenance de l'appelé (C1) pendant la période prédéterminée (T1).

7. Système d'interphone (10) selon la revendication 6, comprenant en outre une mémoire (16) configurée de manière à :
stocker des secondes informations sonores (S2) acquises à partir du second enregistrement sonore, lorsque le second enregistrement sonore est mis en œuvre ; et
stocker les premières informations sonores (S1) acquises à partir du premier enregistrement sonore, lorsque le second enregistrement sonore n'est pas mis en œuvre.

8. Système d'interphone (10) selon l'une quelconque des revendications 1 à 7, comprenant en outre :
une partie de réglage (132) configurée de manière à recevoir des informations de réglage sur un changement de réglage concernant la mise en œuvre ou non de l'enregistrement sonore.

9. Système d'interphone (10) selon la revendication 8, comprenant en outre une partie informative (130) configurée de manière à amener le côté de l'appelé (C1) à fournir des informations sur la base des informations sonores acquises à partir de l'enregistrement sonore ;
dans lequel la partie de réglage (132) est configurée de manière à recevoir en outre des informations de réglage sur un changement de réglage concernant la fourniture ou non des informations.

10. Système d'interphone (10) selon l'une quelconque des revendications 1 à 9, comprenant en outre une partie de sortie (133) configurée de manière à émettre, au niveau du côté de la partie opérationnelle (14), un son de confirmation visant à notifier que l'appelé (C1) est appelé ;
dans lequel la partie de sortie (133) est configurée de manière à, lorsque l'appel de l'appelé (C1) se poursuit à un moment où l'enregistrement sonore est terminé, commencer à émettre le son de confirmation.

11. Système d'interphone (10) selon l'une quelconque des revendications 1 à 10, dans lequel la partie fonctionnelle (F1) est configurée de manière à démarrer l'enregistrement sonore à un début de la période prédéterminée (T1), en tant que déclencheur.

12. Système d'interphone (10) selon l'une quelconque des revendications 1 à 11, dans lequel l'acquisition des informations contient en outre un enregistrement d'image.

13. Système d'interphone (10) selon l'une quelconque des revendications 1 à 12, dans lequel la partie fonctionnelle (F1) est fournie dans l'un quelconque des éléments parmi la station extérieure (1), une station intérieure (2) configurée de manière à communiquer avec la station extérieure (1), et un dispositif de commande (3) configuré de manière à relayer des signaux émis ou reçus entre la station extérieure (1) et la station intérieure (2).

14. Procédé de commande d'un système d'interphone (10), comprenant, en tant qu'une étape fonctionnelle, avant ou au cours d'une période prédéterminée (T1), l'étape consistant à commencer à acquérir des informations sur un opérateur (H1) qui exploite une partie opérationnelle (14) d'une station extérieure (1) pour entrer une opération visant à spécifier un appelé (C1) à travers celle-ci ;
la période prédéterminée (T1) étant une période de temps pendant laquelle l'appelé (C1) est appelé sur la base de l'opération entrée ; et
l'acquisition des informations contient au moins un enregistrement sonore, dans lequel,
à l'étape fonctionnelle, avant ou au cours de l'enregistrement sonore, arrêter l'enregistrement sonore lorsqu'il existe une réponse en provenance de l'appelé (C1).

15. Programme informatique, comprenant des instructions qui, lorsque le programme est exécuté par un ordinateur, amènent l'ordinateur à mettre en œuvre le procédé de commande selon la revendication 14.
